(19) Europäisches Patentamt
European Patent Office
Office européen des brevets

(11) EP 2 860 552 B1

(12) EUROPEAN PATENT SPECIFICATION

(45) Date of publication and mention
of the grant of the patent:
23.09.2020 Bulletin 2020/39

(51) Int Cl.:
$G01T\ 1/24$ (2006.01)   $G01T\ 1/02$ (2006.01)

(21) Application number: 13800595.4

(22) Date of filing: 20.05.2013

(86) International application number:
PCT/JP2013/063961

(87) International publication number:
WO 2013/183434 (12.12.2013 Gazette 2013/50)

(54) RADIATION DOSIMETER AND RADIATION DOSE CALCULATION METHOD

STRAHLENDOSIMETER UND VERFAHREN ZUR STRAHLENDOSISBERECHNUNG

DOSIMÈTRE ET PROCÉDÉ DE CALCUL D'UNE DOSE DE RAYONNEMENT

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(30) Priority: 07.06.2012 JP 2012129788

(43) Date of publication of application:
15.04.2015 Bulletin 2015/16

(73) Proprietor: National University Corporation Shizuoka
University
Shizuoka-shi, Shizuoka 422-8529 (JP)

(72) Inventors:
• AOKI, Toru
Hamamatsu-shi, Shizuoka 432-8561 (JP)
• KOIKE, Akifumi
Hamamatsu-shi, Shizuoka 432-8561 (JP)

(74) Representative: Ribeiro, James Michael et al
Withers & Rogers LLP
4 More London Riverside
London SE1 2AU (GB)

(56) References cited:
WO-A2-2009/062639    JP-A- H0 420 893
JP-A- S63 271 187    JP-A- 2001 221 860
US-A- 4 461 952    US-A- 4 859 853
US-A1- 2011 051 901

• LEE B J ET AL: "Solid-state personal dosimeter using dose conversion algorithm", NUCLEAR INSTRUMENTS & METHODS IN PHYSICS RESEARCH. SECTION A: ACCELERATORS, SPECTROMETERS, DETECTORS, AND ASSOCIATED EQUIPMENT, ELSEVIER BV * NORTH-HOLLAND, NL, vol. 505, no. 1-2, 1 June 2003 (2003-06-01), pages 403-406, XP004429148, ISSN: 0168-9002, DOI: 10.1016/S0168-9002(03)01108-2

## Description

### Technical Field

The present invention relates to a radiation dosimeter and a radiation dose calculation method.

### Background Art

A radiation dosimeter provided with a radiation detector using a semiconductor is available. In such a radiation dosimeter, detection sensitivity to radiation energy differs depending on the semiconductor used for the radiation detector. For example, in a radiation detector using a semiconductor such as CdTe, the detection sensitivity to radiation in a lower energy range is higher than the detection sensitivity to radiation in a higher energy range. Thus, the detection sensitivity and the dose measurement accuracy to higher energy radiation are required to be improved.

Patent Literature 1 describes a radiation detector including a semiconductor detector covered by an electromagnetic shield, which serves as a radiation absorbing filter that absorbs a certain amount of radiation in a low energy range, to improve the uniformity of detection sensitivity to energy, and a scintillator layer and a reflection layer provided on a surface opposite to the incidence surface of the semiconductor detector. In this radiation detector, the scintillator layer emits light due to high-energy radiation passing through the semiconductor detector, and the emitted light is reflected by the reflection layer and is detected by the semiconductor detector.

US4859853 discloses a solid state gamma ray dosimeter which measures radiation in terms of absorption in a material different from the detector material. A solid state detector, an amplifier, an analog-to-digital interface and a microprocessor are combined in circuit to correct for differences between absorption of radiation in detector material and absorption in other materials, especially tissue. A suitable cladding may surround the detector. A method of generating dose translation data for calibrating the microprocessor is also disclosed. The solid state detector is attached to a multichannel analyzer circuit and subject to known doses of various monochromatic gamma rays. Output pulses from the detector are amplified and introduced into the multichannel analyzer. The spectrum produced is used to determine an average channel number (or pulse height) for a given dose of monochromatic radiation. The given dose is in units specific to material different from the detector material. The partial dose represented by a single detector pulse at that energy is computed. Partial doses for other energies are likewise computed. Dose translation data associates a partial dose with a given detector pulse height. Dose translation data is set in the microprocessor of the dosimeter. Such dose translation data can be used to calculate total dose and dose rate in units peculiar to material other than detector material.

US2011051901 relates to a device and method for determining one or more characteristics of radiation using a sensor comprising one or more detector units capable of counting the number of photon or charged particle of said radiation impinging on said sensor in or above a determined energy range.

US4461952 relates to a portable computing device comprising, in known manner, means for adding digital information, means for determining periods of time and display means, wherein it also comprises a nuclear detector adapted to deliver electrical signals whose amplitude spectrum depends biunivocally on the energy spectrum of the radiation in which it is placed and means for converting these signals into digital information, the addition means receiving said digital information, the means for determining periods of time controlling said addition means so as to make a calculation of the dose of nuclear radiation received during a period of time, called integral dose, which is displayed by said display means. The invention is more particularly applicable in the domain of protection against radiation, or health physics.

"Solid-state personal dosimeter using dose conversion algorithm" by Lee B. J. et al. relates to the design and testing of a personal dosimeter based on a silicon PIN photodiode.

### Citation List

### Patent Literature

[Patent Literature 1] Japanese Patent Application Laid-Open Publication No. 2001-4754

### Summary of Invention

### Technical Problem

However, the radiation detector described in Patent Literature 1 needs to include the scintillator layer and the reflection layer to improve the detection sensitivity to radiation in a high energy range and the accuracy of dose measurement. Accordingly, the structure becomes more complicated and the device becomes larger.

According to one embodiment of the present invention, a radiation dosimeter and a radiation dose calculation method are provided that enable the accuracy of dose measurement to be improved with a simple structure.

**Solution to Problem**

A radiation dosimeter according to claim 1 is provided.

With this radiation dosimeter, noise can be reduced and also incident radiation can be scattered by covering the radiation detector with the shield member. The energy of this scattered radiation is distributed at a certain percentage in an energy range lower than the energy of radiation before being scattered. Thus, the detection sensitivity to radiation can be improved when using a radiation detector with which the absorptance (detection sensitivity) in an energy range lower than the energy of radiation before being scattered is higher than the absorptance in the energy of radiation before being scattered. By calculating the dose from the energy of the detected radiation with the conversion factor defined in accordance with the energy of radiation scattered by the shield member, the dose when the shield member does not exist, i.e., the net dose directly absorbed into a human body, can be calculated. Consequently, the accuracy of dose measurement can be improved without complicating the structure.

The radiation detector may comprise CdTe. The CdTe semiconductor has a high efficiency of absorbing radiation. This high efficiency can further improve the detection sensitivity to radiation and can further improve the accuracy of dose measurement.

The shield member also may have a thickness of 0.1 millimeter or more and 1.0 millimeter or less. When such a shield member covers the radiation detector, the detection sensitivity to radiation can be improved and the accuracy of dose measurement can be improved.

The radiation dosimeter may further include a display unit that displays the dose calculated by the arithmetic unit. In this case, displaying an accurately measured dose on the display unit can let a user know more accurate dose.

A radiation dose calculation method according to claim 5 is provided.

In this radiation dose calculation method, incident radiation is scattered by the shield member covering the radiation detector. The energy spectrum of this scattered radiation is distributed at a certain percentage in an energy range lower than the energy of radiation before being scattered. Thus, the detection sensitivity to radiation can be improved when using a radiation detector with which the absorptance in an energy range lower than the energy of radiation before being scattered is higher than the absorptance in the energy of radiation before being scattered. By calculating the dose on the basis of the energy spectrum of radiation detected by the radiation detector in this manner, the accuracy of dose measurement can be improved without complicating the structure. Furthermore, by calculating the dose from the energy spectrum of the detected radiation with the conversion factor defined in accordance with the energy of radiation scattered by the shield member, the dose when the shield member does not exist, i.e., the net dose directly absorbed into a human body, can be calculated.

**Advantageous Effects of Invention**

The present invention can improve the dose measurement accuracy.

**Brief Description of Drawings**

[Fig. 1] Fig. 1 is a schematic block diagram of a radiation dosimeter according to a present embodiment.

[Fig. 2] Fig. 2 is a diagram illustrating one example of energy response of the radiation detector in Fig. 1.

[Fig. 3] Fig. 3 is a diagram illustrating a principle of detecting radiation in the radiation dosimeter in Fig. 1.

[Fig. 4] Fig. 4 is a diagram illustrating one example of energy spectra of scattered radiation when the thickness of a shield member is 0.1 millimeter.

[Fig. 5] Fig. 5 is a diagram illustrating one example of energy spectra of scattered radiation when the thickness of a shield member is 0.5 millimeter.

[Fig. 6] Fig. 6 is a diagram illustrating one example of energy spectra of scattered radiation when the thickness of a shield member is 1.0 millimeter.

[Fig. 7] Fig. 7 is a diagram illustrating scattering rates of 662-keV radiation in various shield members.

[Fig. 8] Fig. 8 is a diagram illustrating increasing rates of absorbed amount in the radiation detector in Fig. 1.

[Fig. 9] Fig. 9 is a functional block diagram of the microcomputer in Fig. 1.

[Fig. 10] Fig. 10 is a flowchart illustrating operation of the radiation dosimeter in Fig. 1.

[Fig. 11] Fig. 11 is a flowchart illustrating details of the calibration process in Fig. 10.

**Description of Embodiments**

Embodiments of the present invention will be described in detail with reference to the attached drawings. In descriptions of the drawings, the same or the corresponding parts are assigned with the same reference signs, and the redundant description will be omitted.

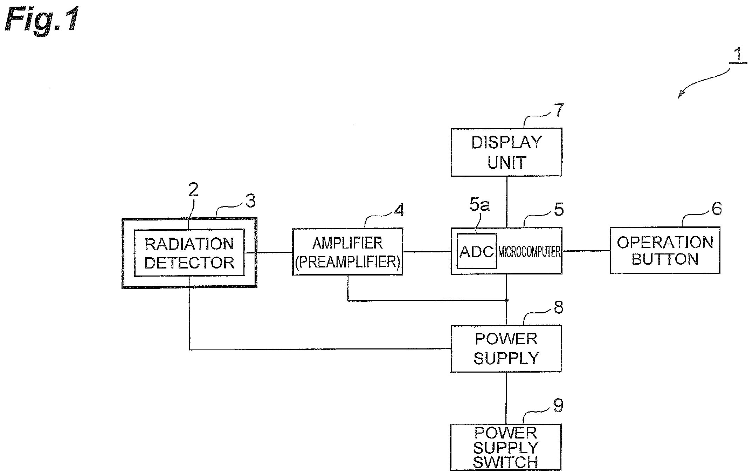

Fig. 1 is a schematic block diagram of a radiation dosimeter according to a present embodiment. As depicted in Fig. 1, this radiation dosimeter 1 is a device that measures a radiation dose, and includes a radiation detector 2, a shield member 3, an amplifier 4, a microcomputer 5 (arithmetic unit), an operation button 6, a display unit 7, a power supply 8, and a power supply switch 9. As a dose to be measured, a sievert (Sv) value, for example, is used.

The radiation detector 2 is a detector made of a semiconductor that can detect radiation, and comprises cadmium telluride (CdTe), for example. The thickness of the radiation detector 2 is about 1 millimeter, for example. In the radiation detector 2, one surface and the other surface of the semiconductor that can detect radiation are provided with respective electrodes (not depicted). In the radiation detector 2, when energy of incident radiation is absorbed, an electron and a hole are generated depending on the magnitude of the energy. Subsequently, the radiation detector 2 outputs a detection signal having a voltage value depending on the magnitude of the energy to the microcomputer 5 via the amplifier 4.

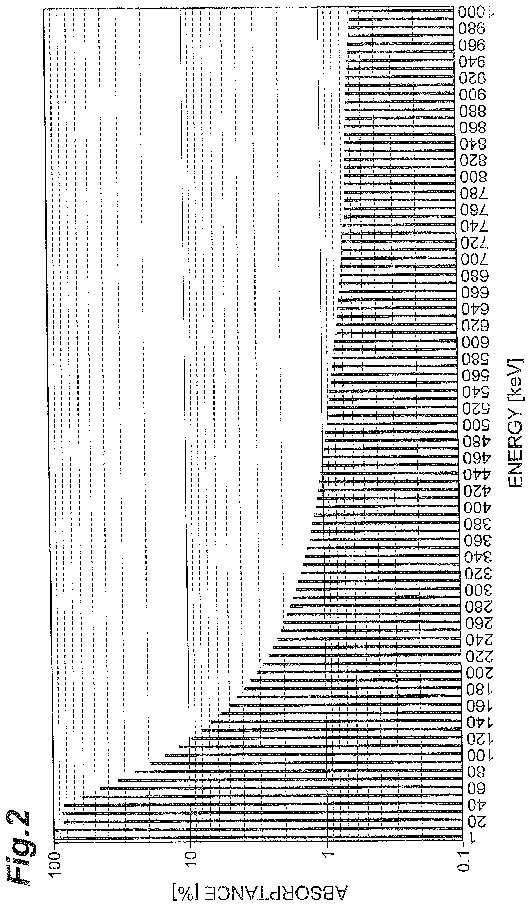

Fig. 2 is a diagram illustrating one example of energy response of the radiation detector 2. The energy response herein means a relation between the energy of radiation and the absorptance of radiation, and is also referred to as a response function. In Fig. 2, the abscissa represents the energy of radiation and the ordinate represents the absorptance of radiation. In this example, the radiation detector 2 comprise CdTe, and the thickness thereof is 1 millimeter. As depicted in Fig. 2, the absorptance of radiation in lower energy ranges is higher than the absorptance of radiation in higher energy ranges, and the absorptance of radiation increases as the energy of radiation decreases. For example, it is known that cesium 137 emits a gamma ray having an energy of 662 keV. When the radiation detector 2 in this example is used alone, because the absorptance of gamma rays emitted from cesium 137 is about 0.7%, the detection sensitivity thereto is significantly low.

The shield member 3 is a metallic sheet-like member, and comprises any of gold (Au), and stainless steel. The shield member 3 has a thickness of 0.1 millimeter or more, for example, and has a thickness of 1.0 millimeter or less, for example. The shield member 3 is provided so as to cover a surface of the radiation detector 2. Between the shield member 3 and the radiation detector 2, a gap of about 0.1 millimeter to 1 millimeter is provided. The amplifier 4 is a signal amplifier (preamplifier) that amplifies a detection signal output from the radiation detector 2. The amplifier 4 outputs the amplified detection signal to the microcomputer 5.

The microcomputer 5 is an arithmetic unit that calculates a dose on the basis of radiation detected by the radiation detector 2. The microcomputer 5 receives a detection signal amplified by the amplifier 4, and generates an energy spectrum depending on the voltage value of the detection signal received. The microcomputer 5 also performs a certain computation on the energy spectrum to calculate a radiation dose. The microcomputer 5 then outputs display information on the calculated dose to be displayed on the display unit 7.

The microcomputer 5 has an ADC 5a. The ADC 5a converts the voltage value of the received detection signal into a channel. The channel herein means a memory address that corresponds to the magnitude of energy. In general, an energy spectrum represents a relation between energy and the strength of the energy, and the strength of energy is represented by a count value that is the number of incidences of radiation having the energy. Inside the microcomputer 5, to save the capacity of a memory, count values of respective energies are stored in sequential addresses (channels) of the memory. More specifically, every time the microcomputer 5 receives a detection signal from the radiation detector 2 via the amplifier 4, the microcomputer 5 converts the voltage value of the detection signal into a channel with the ADC 5a and increments the count value stored in the converted channel by one. In this manner, the microcomputer 5 acquires a channel spectrum. The microcomputer 5 then converts the channel into energy for display, for example, to convert the channel spectrum into an energy spectrum. Details of functions of the microcomputer 5 will be described later.

The operation button 6 is an input device for operating the radiation dosimeter 1. The operation button 6 includes, for example, an operation button for selecting operation modes (accumulation mode, real-time mode) of the radiation dosimeter 1 and an operation button for providing instructions for determination. Examples of the operation modes of the radiation dosimeter 1 include an initializing mode, an accumulation mode, and a real-time mode. The initializing mode is an operation mode for initializing a conversion factor to calibrate the detection sensitivity of the radiation dosimeter 1. The initializing mode is activated by, for example, operation of selecting the initializing mode among the operation modes displayed on the display unit 7, and operation of pushing down the power supply switch 9 while pushing a certain button of the operation button 6 to start up the radiation dosimeter 1. This process of initializing the conversion factor in the initializing mode is performed by a manufacturer or a dealer at shipment of the product, for example.

The accumulation mode is a mode for displaying a radiation dose (Sv) measured during a period from a power-ON state to a power-OFF state. The real-time mode is a mode for displaying a radiation dose rate (Sv/h) measured in the power-ON state.

The display unit 7 is a display unit such as a liquid crystal display. This display unit 7 displays predetermined information on the basis of the display information output by the microcomputer 5. For example, the display unit 7 displays the dose calculated by the microcomputer 5 and the state of the power supply 8. The power supply 8 supplies power to each component of the radiation dosimeter 1. The power supply 8 can be switched between the ON state and the OFF state by operating the power supply switch 9.

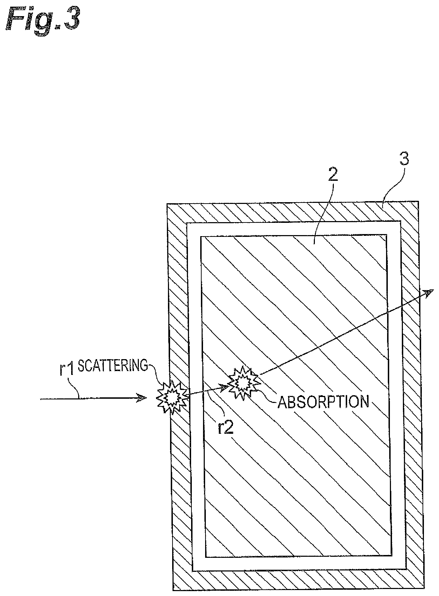

The following describes a principle of detecting radiation in the radiation dosimeter 1 with reference to Fig. 3. Fig. 3 is a diagram illustrating a cross section of the radiation detector 2 and the shield member 3. As depicted in Fig. 3, the radiation detector 2 is covered by the shield member 3. In the radiation dosimeter 1, when a radiation r1 in the atmosphere enters the shield member 3, Compton scattering occurs in the shield member 3. At this time, the energy of a radiation r2 after the scattering is equal to or lower than the energy of the radiation r1, and is distributed at a certain percentage in energy ranges lower than the energy of the radiation r1 before the scattering. Part of the radiation r2 after the scattering is absorbed by the radiation detector 2. The radiation r2 passing through the radiation detector 2 without being absorbed passes through the shield member 3 to exit to the outside.

As described above, in the radiation detector 2, the absorptance of radiation in lower energy ranges is higher than the absorptance of radiation in higher energy ranges. Thus, in the radiation detector 2, the absorptance of the radiation r2 is higher than the absorptance of the radiation r1. Consequently, the absorptance of radiation in the radiation detector 2 improves, and the detection sensitivity to radiation improves.

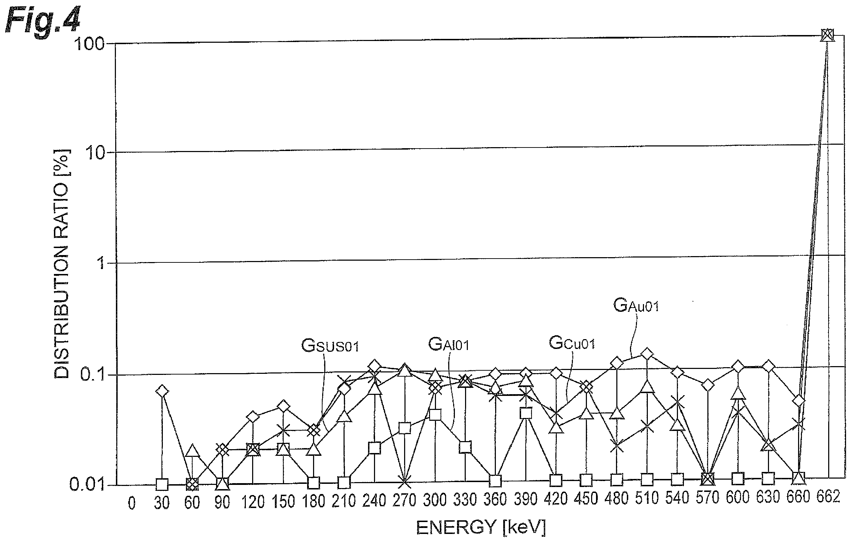

The following describes concrete examples of radiation detection in the radiation dosimeter 1 with reference to Figs. 4 to 8. In these examples, stainless steel contained 1% of silicon (Si), 18% of chrome (Cr), 2% of manganese (Mn), 70% of iron (Fe), and 9% of nickel (Ni), and the density of the stainless steel was 7.93 g/cm$^3$. In these examples, the radiation detector 2 comprised CdTe, and the thickness thereof was 1 millimeter. Between the radiation detector 2 and the shield member 3, a gap of about 0.1 millimeter to 1.0 millimeter was provided.

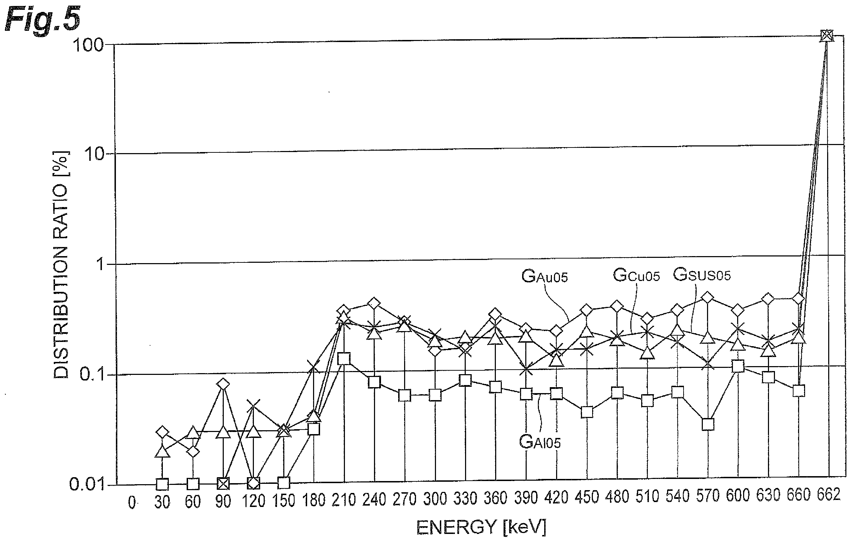

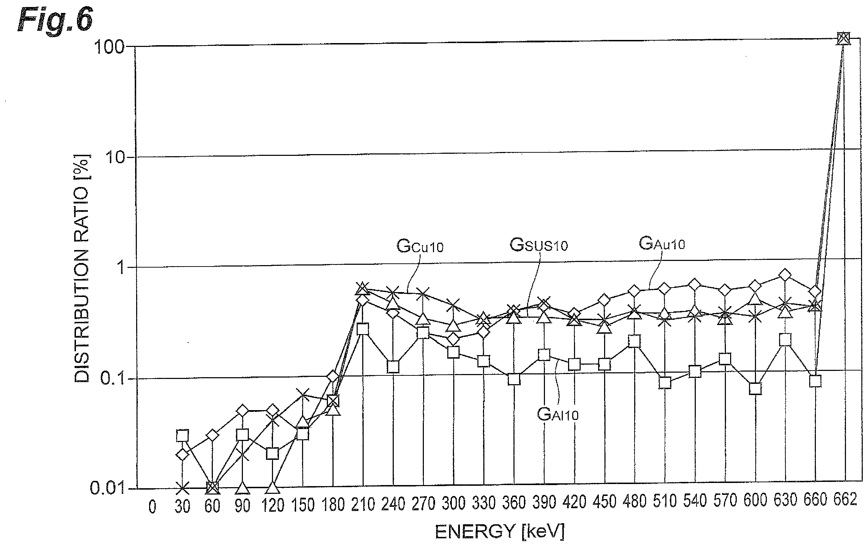

Fig. 4 is a diagram illustrating one example of energy spectra of scattered radiation when the thickness of various shield members 3 (Au, Al, stainless steel, and Cu) was 0.1 millimeter. In Fig. 4, the abscissa represents the energy of radiation incident into the radiation detector 2, and the ordinate represents the ratio (distribution ratio) of the number of incidences of radiation for each energy to the total number of incidences of radiation. The same applies to Figs. 5 and 6. The graph $G_{Au01}$ indicates an energy spectrum of scattered radiation when the shield member 3 was Au having a thickness of 0.1 millimeter. The graph $G_{Al101}$ indicates an energy spectrum of scattered radiation when the shield member 3 was Al having a thickness of 0.1 millimeter. The graph $G_{SUS01}$ indicates an energy spectrum of scattered radiation when the shield member 3 was stainless steel having a thickness of 0.1 millimeter. The graph $G_{Cu01}$ indicates an energy spectrum of scattered radiation when the shield member 3 was Cu having a thickness of 0.1 millimeter. The energy spectra of these scattered radiations indicate energy spectra after radiations each having an energy of 662 keV were scattered by the respective shield members 3.

As depicted in Fig. 4, when the shield member 3 was Au having a thickness of 0.1 millimeter, the distribution ratio of energy near 662 keV was close to 100%, the distribution ratio of energy of 200 keV to 660 keV was about 0.1%, the distribution ratio of energy of 200 keV or less was about 0.01 to 0.08%. When the shield member 3 was Al having a thickness of 0.1 millimeter, the distribution ratio of energy near 662 keV was close to 100%, the distribution ratio of energy of 660 keV or less was about 0 to 0.05%. When the shield member 3 was stainless steel having a thickness of 0.1 millimeter, the distribution ratio of energy near 662 keV was close to 100%, the distribution ratio of energy of 200 keV to 660 keV was about 0.04 to 0.09%, the distribution ratio of energy of 200 keV or less was about 0.01 to 0.02%. When the shield member 3 was Cu having a thickness of 0.1 millimeter, the distribution ratio of energy near 662 keV was close to 100%, the distribution ratio of energy of 200 keV to 660 keV was about 0.04 to 0.09%, the distribution ratio of energy of 200 keV or less was about 0.01 to 0.04%.

Fig. 5 is a diagram illustrating one example of energy spectra of scattered radiation when the thickness of various shield members 3 was 0.5 millimeter. The graph $G_{Au05}$ indicates an energy spectrum of scattered radiation when the shield member 3 was Au having a thickness of 0.5 millimeter. The graph $G_{Al05}$ indicates an energy spectrum of scattered radiation when the shield member 3 was Al having a thickness of 0.5 millimeter. The graph $G_{SUS05}$ indicates an energy spectrum of scattered radiation when the shield member 3 was stainless steel having a thickness of 0.5 millimeter. The graph $G_{Cu05}$ indicates an energy spectrum of scattered radiation when the shield member 3 was Cu having a thickness of 0.5 millimeter. The energy spectra of these scattered radiations indicate energy spectra after radiations each having an energy of 662 keV were scattered by the respective shield members 3.

As depicted in Fig. 5, when the shield member 3 was Au having a thickness of 0.5 millimeter, the distribution ratio of energy near 662 keV was close to 100%, the distribution ratio of energy of 200 keV to 660 keV was about 0.2 to 0.6%, the distribution ratio of energy of 200 keV or less was about 0.01 to 0.08%. When the shield member 3 was Al having a thickness of 0.5 millimeter, the distribution ratio of energy near 662 keV was close to 100%, the distribution ratio of energy of 200 keV to 660 keV was about 0.04 to 0.1%, the distribution ratio of energy of 200 keV or less was about 0 to 0.03%. When the shield member 3 was stainless steel having a thickness of 0.5 millimeter, the distribution ratio of energy near 662 keV was close to 100%, the distribution ratio of energy of 200 keV to 660 keV was about 0.1 to 0.3%, the distribution ratio of energy of 200 keV or less was about 0.02 to 0.05%. When the shield member 3 was Cu having a thickness of 0.5 millimeter, the distribution ratio of energy near 662 keV was close to 100%, the distribution ratio of energy of 200 keV to 660 keV was about 0.1 to 0.3%, the distribution ratio of energy of 200 keV or less was about 0 to 0.1%.

Fig. 6 is a diagram illustrating one example of energy spectra of scattered radiation when the thickness of various shield members 3 was 1.0 millimeter. The graph $G_{Au10}$ indicates an energy spectrum of scattered radiation when the shield member 3 was Au having a thickness of 1.0 millimeter. The graph $G_{Al10}$ indicates an energy spectrum of scattered radiation when the shield member 3 was Al having a thickness of 1.0 millimeter. The graph $G_{SUS10}$ indicates an energy spectrum of scattered radiation when the shield member 3 was stainless steel having a thickness of 1.0 millimeter. The graph $G_{Cu10}$ indicates an energy spectrum of scattered radiation when the shield member 3 was Cu having a thickness of 1.0 millimeter. The energy spectra of these scattered radiations indicate energy spectra after radiations each having an energy of 662 keV were scattered by the respective shield members 3.

As depicted in Fig. 6, when the shield member 3 was Au having a thickness of 1.0 millimeter, the distribution ratio of energy near 662 keV was close to 100%, the distribution ratio of energy of 200 keV to 660 keV was about 0.3 to 0.8%, the distribution ratio of energy of 200 keV or less was about 0.02 to 0.1%. When the shield member 3 was Al having a thickness of 1.0 millimeter, the distribution ratio of energy near 662 keV was close to 100%, the distribution ratio of energy of 200 keV to 660 keV was about 0.08 to 0.3%, the distribution ratio of energy of 200 keV or less was about 0.01 to 0.06%. When the shield member 3 was stainless steel having a thickness of 1.0 millimeter, the distribution ratio of energy near 662 keV was close to 100%, the distribution ratio of energy of 200 keV to 660 keV was about 0.3 to 0.7%, the distribution ratio of energy of 200 keV or less was about 0 to 0.06%. When the shield member 3 was Cu having a thickness of 1.0 millimeter, the distribution ratio of energy near 662 keV was close to 100%, the distribution ratio of energy of 200 keV to 660 keV was about 0.3 to 0.7%, the distribution ratio of energy of 200 keV or less was about 0 to 0.07%.

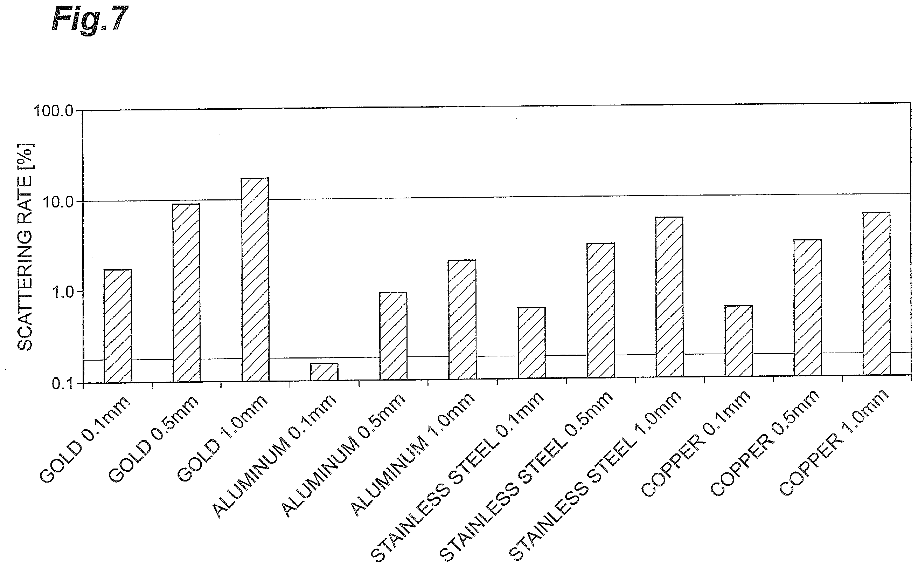

Fig. 7 is a diagram illustrating one example of scattering rates of 662-keV radiation in the various shield members 3 of Figs. 4 to 6. As depicted in Fig. 7, it was found that the scattering rate increases as the thickness of the shield member 3 increases. It was also found that Au had the highest scattering rate among Au, Al, stainless steel, and Cu.

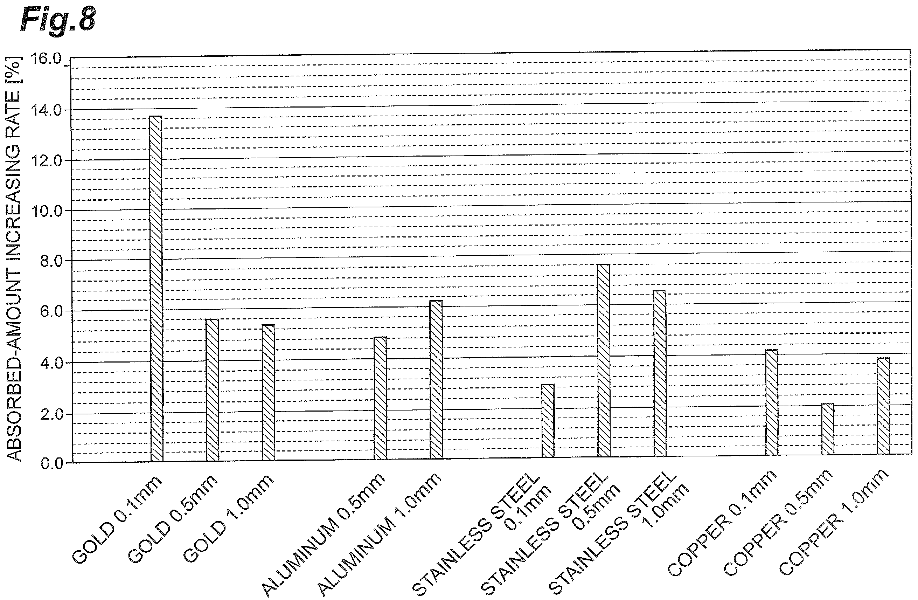

Fig. 8 is a diagram illustrating increasing rates of radiation absorbed amount in the radiation detector 2. These increasing rates of radiation absorbed amount are increasing rates with respect to the radiation absorbed amount in the radiation detector 2 when the shield members 3 are not provided. As depicted in Fig. 8, the increasing rate of radiation absorbed amount was the highest at 13.6% when the shield member 3 being Au having a thickness of 0.1 millimeter was used out of the various shield members 3 of Figs. 4 to 6. Even when the other types of shield members 3 were used, increasing rates of the order of several percent were obtained. These increasing rates of radiation absorbed amount are determined based on the ratios between the rates of radiation scattered by the shield members 3 and the rate of radiation absorbed by the radiation detector 2. Thus, when a shield member 3 having a higher scattering rate and a radiation detector 2 having a higher absorptance in lower energy ranges are used, the increasing rate of radiation absorbed amount in the radiation detector 2 is also higher.

As described above, whichever metal in Figs. 4 to 6 was used, the distribution ratio of energy near 662 keV was close to 100%, and the distribution ratio of energy of 660 keV or less was in the order of several percent. Thus, if the radiation r1 having an energy of 662 keV enters the shield members 3 of Figs. 4 to 6, the scattering itself occurs in the shield members 3 only to the extent of several percent, but the energy of the radiation r2 after the scattering is distributed at a certain percentage in energy ranges lower than 662 keV. In contrast, as depicted in Fig. 2, the absorptance of 662-keV energy in the radiation detector 2 was about 0.7%, but the absorptance of 200-keV energy was about 3%, and the absorptance of 100-keV energy was about 15%. In this manner, in the radiation detector 2, because the absorptance of the radiation r2 of lower energy after the scattering is higher than the absorptance of the radiation r1 before the scattering, the absorptance (detection sensitivity) improves by the order of several percent to ten-odd percent as a whole in comparison to the case without the shield member 3 provided.

As described above, the radiation r2 scattered by the shield member 3 is detected by the radiation detector 2. Consequently, the absorptance of radiation in the radiation detector 2 improves, and the detection sensitivity of radiation improves.

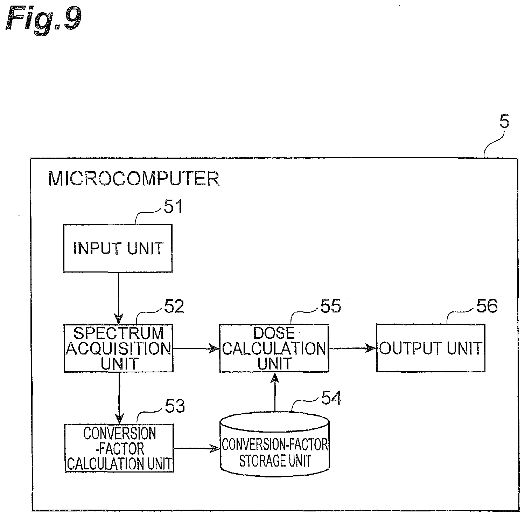

The following describes a method of calculating the dose of radiation detected as described above. This calculation of the dose is performed by the microcomputer 5. Fig. 9 is a functional block diagram of the microcomputer 5. As depicted in Fig. 9, the microcomputer 5 includes an input unit 51, a spectrum acquisition unit 52, a conversion-factor calculation unit 53, a conversion-factor storage unit 54, a dose calculation unit 55, and an output unit 56.

The input unit 51 receives operation of a user via the operation button 6. The input unit 51 then examines the content of the received operation. For example, the input unit 51 determines whether the received operation is operation of selecting the initializing mode. In an explanation with a concrete example, when a screen for selecting operation modes is displayed on the display unit 7, the input unit 51 determines whether the operation of selecting the initializing mode is performed. The input unit 51 then transmits operation information on the received operation to the spectrum acquisition unit 52 and the dose calculation unit 55. For example, the input unit 51 transmits information on the selected operation mode to the spectrum acquisition unit 52 and the dose calculation unit 55.

The spectrum acquisition unit 52 acquires a channel spectrum of radiation detected by the radiation detector 2. The spectrum acquisition unit 52 receives a detection signal output from the amplifier 4 in response to, for example, the reception of the information on the operation mode from the input unit 51. The spectrum acquisition unit 52 then measures the voltage value of the received detection signal, and counts the number of incidences using the voltage value (channel) as the abscissa in a histogram form to acquire the channel spectrum.

The conversion-factor calculation unit 53 calculates a conversion factor for converting energy into a dose on the basis of the channel spectrum acquired by the spectrum acquisition unit 52. The following describes in detail a method of calculating the conversion factor from the channel spectrum. To begin with, the conversion-factor calculation unit 53 analyzes the channel spectrum acquired by the spectrum acquisition unit 52 to search a peak of the channel spectrum. The conversion-factor calculation unit 53 then calculates a peak centroid channel. This peak centroid channel $Ch_p$ herein is a channel corresponding to the center point of the peak, and is calculated by the following equation (1) using a sum total $S_{all}$ of weighted areas and a total count value $C_{all}$.

[Numeral 1]

$$Ch_p = S_{all}/C_{all} \qquad (1)$$

As represented by the following equation (2), the sum total $S_{all}$ of weighted areas is calculated by summing the product of a count value $C_i$ for each channel $Ch_i$ and the channel $Ch_i$ from a peak start channel $Ch_a$ to a peak end channel $Ch_b$. The peaks generally depend on Gaussian distribution. Accordingly, the peak start channel $Ch_a$ and the peak end channel $Ch_b$ are determined manually by visual measurement or automatically by an acquisition algorithm as points between which the whole Gaussian distribution fits. Herein, a and b each are an integer of one or more, and b is larger than a.

[Numeral 2]

$$S_{all} = \Sigma_{i=a}^{b}(Ch_i \times C_i) \qquad (2)$$

As represented by the following equation (3), the total count value $C_{all}$ is calculated by summing the count value $C_i$ for each channel $Ch_i$ from the peak start channel $Ch_a$ to the peak end channel $Ch_b$.

[Numeral 3]

$$C_{all} = \Sigma_{i=a}^{b} C_i \qquad (3)$$

Subsequently, the conversion-factor calculation unit 53 calculates a first calibration factor A and a second calibration factor B for converting a channel Ch into an energy E. Herein, the relation between a first peak centroid channel $Ch_{p1}$ and a predetermined first energy $E_1$ is represented by the following equation (4) using the first calibration factor A and the second calibration factor B. Similarly, the relation between a second peak centroid channel $Ch_{p2}$ and a predetermined second energy $E_2$ is represented by the following equation (5) using the first calibration factor A and the second calibration factor B.

[Numeral 4]

$$E_1 = A \times Ch_{p1} + B \qquad (4)$$

[Numeral 5]

$$E_2 = A \times Ch_{p2} + B \qquad (5)$$

The first energy $E_1$ and the second energy $E_2$ each are a peak energy of a radioactive substance whose peak energy in the energy spectrum is known in advance. The first peak centroid channel $Ch_{p1}$ is a peak centroid channel that is calculated from a measured channel spectrum of a radioactive substance having a peak energy of the first energy $E_1$. Similarly, the second peak centroid channel $Ch_{p2}$ is a peak centroid channel that is calculated from a measured channel spectrum of a radioactive substance having a peak energy of the second energy $E_2$.

The first calibration factor A and the second calibration factor B are calculated by the following equations (6) and (7) that are obtained by solving the above-described simultaneous equations (4) and (5). The conversion-factor calculation unit 53 stores the first calibration factor A and the second calibration factor B in the conversion-factor storage unit 54.

[Numeral 6]

$$A = \frac{E_2 - E_1}{Ch_{p2} - Ch_{p1}} \qquad (6)$$

[Numeral 7]

$$B = E_2 - \frac{E_2 - E_1}{Ch_{p2} - Ch_{p1}} \times Ch_{p2} \qquad (7)$$

Subsequently, the conversion-factor calculation unit 53 converts the channel Ch into the energy E. The energy $E_j$ herein is calculated by the following equation (8) using the channel $Ch_j$, the first calibration factor A, and the second calibration factor B.

[Numeral 8]

$$E_j = A \times Ch_j + B \qquad (8)$$

The conversion-factor calculation unit 53 converts each channel $Ch_j$ into an energy $E_j$, thereby converting a channel spectrum acquired by the spectrum acquisition unit 52 into a histogram (energy spectrum) of the energy E versus the count value C. Furthermore, the conversion-factor calculation unit 53 adds up count values for each certain energy range (e.g., 100 keV) in the energy spectrum to convert the energy spectrum into spectra for a dozen or so points.

The conversion-factor calculation unit 53 multiplies the added-up count values by a surveymeter factor corresponding to the energy of each point to calculate a conversion factor for each energy range. The surveymeter factor herein is a response function for a surveymeter corresponding to radiation energy, and is publicly available from surveymeter dealers. This surveymeter factor is determined in advance for each energy. The conversion-factor calculation unit 53 stores the conversion factor thus calculated in the conversion-factor storage unit 54.

The conversion-factor storage unit 54 stores therein the first calibration factor A and the second calibration factor B calculated by the conversion-factor calculation unit 53 and the conversion factors for the respective energies calculated by the conversion-factor calculation unit 53.

The dose calculation unit 55 calculates a dose on the basis of the channel spectrum acquired by the spectrum acquisition unit 52 and the first calibration factor A, the second calibration factor B, and the conversion factors stored in the conversion-factor storage unit 54. In a more specific explanation, the dose calculation unit 55 uses the first calibration factor A and the second calibration factor B as represented by the above equation (8) to convert the channel spectrum into an energy spectrum. Furthermore, the dose calculation unit 55 adds up count values of the energy spectrum for each energy range that is the same as for the conversion factors to convert the energy spectrum into spectra for a dozen or so points.

The dose calculation unit 55 multiplies the count value in each energy range by a conversion factor corresponding to the energy range to calculate a dose for each energy range. The dose calculation unit 55 then adds up the doses in the respective energy ranges to calculate the total dose. The output unit 56 outputs display information for displaying the dose calculated by the dose calculation unit 55 on the display unit 7.

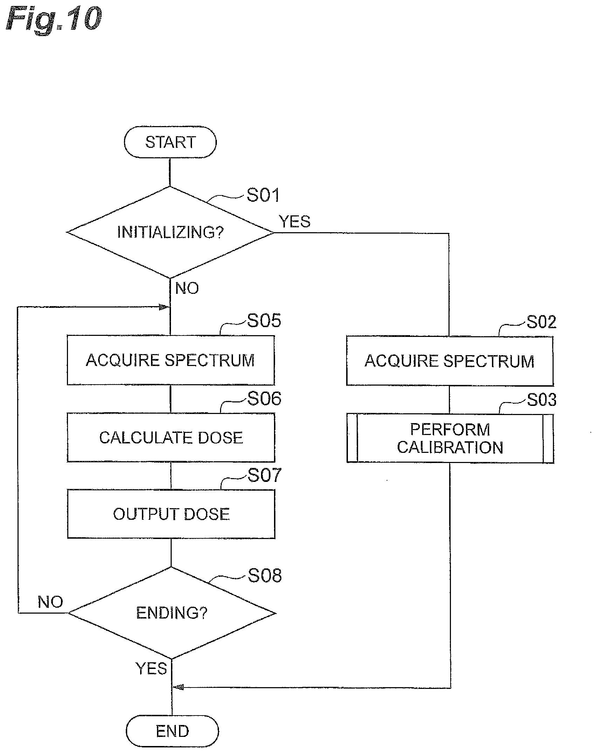

The following describes operation of the radiation dosimeter 1 having the above-described configuration. Fig. 10 is a flowchart illustrating the operation of the radiation dosimeter 1. The operation of the radiation dosimeter 1 is started when a user operates the power supply switch 9 to switch the power supply 8 from the OFF state to the ON state.

To begin with, the input unit 51 determines whether the received operation is operation of selecting the initializing mode (step S01). At step S01, if it is determined that the received operation is operation of selecting the initializing mode (YES at step S01), an initializing process is performed. In this initializing process, the spectrum acquisition unit 52 receives a detection signal output from the radiation detector 2 via the amplifier 4, and acquires a channel spectrum of radiation detected by the radiation detector 2 (step S02). Next, the conversion-factor calculation unit 53 calculates a conversion factor on the basis of the channel spectrum acquired by the spectrum acquisition unit 52, and stores the calculated conversion factor in the conversion-factor storage unit 54 (step S03). Details of step S03 will be described later. When the process of step S03 has been completed, the operation (initializing process) of the radiation dosimeter 1 ends.

At step S01, if it is determined that the received operation is not operation of selecting the initializing mode (NO at step S01), that is, if it is determined that the received operation is operation of selecting another operation mode, a radiation-dose calculation process based on the selected mode is performed. In this radiation-dose calculation process, the spectrum acquisition unit 52 receives a detection signal output from the radiation detector 2 via the amplifier 4, and acquires a channel spectrum of radiation detected by the radiation detector 2 (step S05).

Next, the dose calculation unit 55 converts the channel spectrum acquired by the spectrum acquisition unit 52 into an energy spectrum on the basis of the first calibration factor A and the second calibration factor B stored in the conversion-factor storage unit 54 using the above equation (8) (spectrum acquisition step). The dose calculation unit 55 then calculates the dose of radiation on the basis of the energy spectrum thus converted and the conversion factors stored in the conversion-factor storage unit 54 (step S06, dose calculation step). In other words, the dose calculation unit 55 multiplies the count value for each energy of the energy spectrum by the conversion factor corresponding to the energy to calculate the dose for each energy. The dose calculation unit 55 then adds up the doses for the respective energies to calculate the total dose.

The output unit 56 outputs display information for displaying the dose calculated by the dose calculation unit 55 on the display unit 7, thereby causing the display unit 7 to display the dose (step S07). Subsequently, the input unit 51 determines whether operation of ending the radiation-dose calculation process has been performed (step S08). Examples of the operation of ending the radiation-dose calculation process include operation of switching the power supply 8 to the OFF state with the power supply switch 9. At step S08, if it is determined that the operation of ending the radiation-dose calculation process is not performed (NO at step S08), the flow returns to step S05, and the processes of step S05 to step S08 are repeated.

At step S08, if it is determined that the operation of ending the radiation-dose calculation process is performed (YES at step S08), the operation (radiation-dose calculation process) of the radiation dosimeter 1 ends. Herein, for convenience of explanation, step S08 follows step S07. However, because the power supply switch 9 can be operated at any given timing by the user, step S08 may be performed for each predetermined period regardless of the flowchart in Fig. 10.

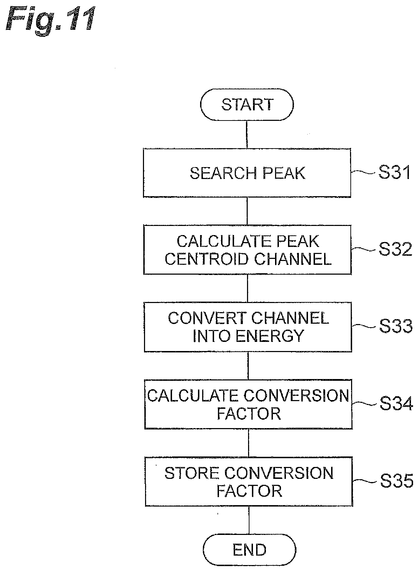

The following describes details of the calibration process at step S03. Fig. 11 is a flowchart illustrating the details of the calibration process. As depicted in Fig. 11, the conversion-factor calculation unit 53 first analyzes the channel spectrum acquired by the spectrum acquisition unit 52 to search a peak of the channel spectrum (step S31). The conversion-factor calculation unit 53 then calculates a peak centroid channel using the above equations (1) to (3) (step S32).

Next, the conversion-factor calculation unit 53 calculates the first calibration factor A and the second calibration factor B for converting a channel into energy on the basis of the calculated peak centroid channel using the above equations (4) to (7). The conversion-factor calculation unit 53 then converts the channel spectrum into an energy spectrum using the above equation (8) (step S33).

Subsequently, the conversion-factor calculation unit 53 adds up count values for each certain energy range (e.g., 100 keV) in the energy spectrum to convert the energy spectrum into spectra for a dozen or so points. The conversion-factor calculation unit 53 then multiplies the added-up count values by a surveymeter factor corresponding to the energy of each point to calculate a conversion factor for each energy range (step S34). The conversion-factor calculation unit 53 then stores the calculated conversion factor in the conversion-factor storage unit 54 (step S35), and ends the calibration process.

In the radiation dosimeter 1 and the radiation dose calculation method using the radiation dosimeter 1, the radiation detector 2 is covered by the shield member 3, whereby noise can be reduced and also the incident radiation r1 can be scattered. The energy of the radiation r2 after this scattering is distributed at a certain percentage in energy ranges lower than the energy of the radiation r1 before the scattering. In the radiation detector 2, the absorptance of radiation in energy ranges lower than the energy of the radiation r1 before the scattering is higher than the absorptance of radiation in the energy of the radiation r1 before the scattering. Thus, the detection sensitivity to radiation can be improved.

By using a conversion factor that is determined based on the energy of radiation scattered by the shield member 3 to calculate the dose from the energy of detected radiation, the dose without the shield member 3, i.e., the net dose directly absorbed into a human body can be calculated. Consequently, the accuracy of dose measurement can be improved without complicating the structure.

It should be noted that the radiation dosimeter and the radiation dose calculation method according to the present invention are not limited to those described in the present embodiment. For example, the radiation detector 2 may comprise cadmium zinc telluride (CdZnTe), thallium bromide (TlBr), or germanium (Ge), for example, because the absorptance in energy ranges lower than the energy of radiation to be detected before scattering only has to be higher than the absorptance in the energy of radiation before the scattering.

The operation button 6 may be replaced with another input device. The input unit 51 may determine that the initializing mode has been selected by detecting that, with a certain button of the operation button 6 being pushed, the power supply switch 9 is pushed to switch the power supply 8 into the ON state.

The conversion-factor calculation unit 53 calculates a conversion factor every 100 keV, but may calculate the conversion factor for each of any energy ranges. Smaller energy ranges enable the dose calculation unit 55 to calculate a more accurate dose.

The conversion-factor calculation unit 53 may calculate a second conversion factor for converting a count value for each channel into a dose on the basis of the first calibration factor A, the second calibration factor B, and the conversion factors. In this case, the dose calculation unit 55 may calculate the dose by multiplying the count value for each channel of the channel spectrum acquired by the spectrum acquisition unit 52 by the second conversion factor.

**Reference Signs List**

1... radiation dosimeter, 2... radiation detector, 3... shield member, 5... microcomputer (arithmetic unit), 7... display unit

**Claims**

1. A radiation dosimeter (1) comprising:

   a radiation detector (2) made of a semiconductor that is configured to detect radiation;
   a shield member (3) that covers the radiation detector (2); and
   an arithmetic unit that is configured to calculate a dose of radiation based on energy of radiation detected by the radiation detector (2) and a conversion factor that is defined in accordance with energy of radiation scattered by the shield member (3),
   wherein the radiation detector (2) is configured to detect the radiation scattered by the shield member (3),
   **characterised in that** the shield member (3) comprises any of Au and stainless steel.

2. The radiation dosimeter according to claim 1, wherein the radiation detector comprises CdTe.

3. The radiation dosimeter according to claim 1 or 2, wherein the shield member has a thickness of 0.1 millimeter or more and 1.0 millimeter or less.

4. The radiation dosimeter according to any one of claims 1 to 3, wherein the radiation dosimeter further comprises a display unit that is configured to display the dose calculated by the arithmetic unit.

5. A radiation dose calculation method using the radiation dosimeter of any one of claims 1 to 4, **characterised in that** the radiation dose calculation method comprises:

   a spectrum acquisition step of acquiring an energy spectrum of radiation that is detected by the radiation detector (2) after being scattered by the shield member (3);
   a dose calculation step of calculating a radiation dose based on the energy spectrum acquired at the spectrum acquisition step and a conversion factor that is defined in accordance with energy of radiation scattered by the shield member (3).

**Patentansprüche**

1. Ein Strahlendosimeter (1), umfassend:

   einen Strahlungsdetektor (2) hergestellt aus einem Halbleiter, der zum Detektieren von Strahlung konfiguriert ist;
   ein Abschirmelement (3), das den Strahlungsdetektor (2) abdeckt; und
   eine Arithmetikeinheit, die konfiguriert ist, eine Strahlendosis zu berechnen, basierend auf einer von dem Strahlungsdetektor (2) detektierten Strahlungsenergie und einem Konversionsfaktor, der entsprechend einer von dem Abschirmelement (3) gestreuten Strahlungsenergie definiert ist,
   wobei der Strahlungsdetektor (2) konfiguriert ist, die von dem Abschirmelement (3) gestreute Strahlung zu detektieren,

**dadurch gekennzeichnet, dass** das Abschirmelement (3) Au und/oder Edelstahl umfasst.

2. Strahlendosimeter nach Anspruch 1, wobei der Strahlungsdetektor CdTe umfasst.

3. Strahlendosimeter nach Anspruch 1 oder 2, wobei das Abschirmelement eine Dicke von 0,1 Millimeter oder mehr und 1,0 Millimeter oder weniger aufweist.

4. Strahlendosimeter nach einem der Ansprüche 1 bis 3, wobei das Strahlendosimeter ferner eine Anzeigeeinheit umfasst, die konfiguriert ist, die von der arithmetischen Einheit berechnete Dosis anzuzeigen.

5. Strahlendosis-Berechnungsverfahren unter Verwendung des Strahlendosimeters nach einem der Ansprüche 1 bis 4, **dadurch gekennzeichnet, dass** das Strahlendosis-Berechnungsverfahren umfasst:

   einen Spektrumserfassungsschritt des Erfassens eines Energiespektrums von Strahlung, die von dem Strahlungsdetektor (2) detektiert wird, nachdem sie von dem Abschirmelement (3) gestreut wurde;
   einen Dosisberechnungsschritt des Berechnens einer Strahlendosis basierend auf dem bei dem Spektrumserfassungsschritt erfassten Energiespektrum und einem Konversionsfaktor, der entsprechend einer von dem Abschirmelement (3) gestreuten Strahlungsenergie definiert ist.

## Revendications

1. Dosimètre de rayonnement (1) comprenant :

   - un détecteur de rayonnement (2) réalisé par un semi-conducteur configuré pour détecter le rayonnement,
   - un écran (3) couvrant le détecteur de rayonnement (2), et
   - une unité arithmétique pour calculer une dose de rayonnement en se fondant sur l'énergie du rayonnement détecté par le détecteur de rayonnement (2) et un coefficient de conversion défini en fonction de l'énergie du rayonnement dispersé par l'écran (3),

   dans lequel
   le détecteur de rayonnement (2) détecteur le rayonnement dispersé par l'écran (3),
   dosimètre **caractérisé en ce que**
   l'écran (3) comprend de l'or Au ou de l'acier inoxydable.

2. Dosimètre de rayonnement selon la revendication 1,
   dans lequel
   le détecteur de rayonnement comprend CdTe.

3. Dosimètre de rayonnement selon la revendication 1 ou 2,
   dans lequel
   l'écran a une épaisseur de 0,1mm ou plus et 1,0mm ou moins.

4. Dosimètre de rayonnement selon l'une des revendication 1 à 3,
   qui comprend en outre une unité d'affichage configurée pour afficher la dose calculée par l'unité arithmétique.

5. Procédé de calcul d'une dose de rayonnement en utilisant le dosimètre de rayonnement selon l'une quelconque des revendications 1 à 4, **caractérisé en ce que**
   le procédé de calcul de la dose de rayonnement comprend une étape d'acquisition du spectre en recueillant l'énergie du spectre du rayonnement détecté par le détecteur de rayonnement (2) après dispersion par l'écran (3),

   - une étape de calcul de la dose consistant à calculer la dose de rayonnement en se fondant sur le spectre d'énergie acquis dans l'étape d'acquisition de spectre et un coefficient de conversion défini en fonction de l'énergie de rayonnement dispersé par l'écran (3).

EP 2 860 552 B1

## Fig.1

## Fig.2

EP 2 860 552 B1

*Fig.3*

Fig.4

EP 2 860 552 B1

Fig.5

EP 2 860 552 B1

Fig.6

Fig.7

# Fig.8

# Fig.9

5

MICROCOMPUTER

51

INPUT UNIT

52

SPECTRUM ACQUISITION UNIT

55

DOSE CALCULATION UNIT

56

OUTPUT UNIT

53

CONVERSION -FACTOR CALCULATION UNIT

54

CONVERSION-FACTOR STORAGE UNIT

# Fig.10

```
                        ┌─────────┐
                        │  START  │
                        └────┬────┘
                             │
                          ╱──┴──╲  S01
                        ╱         ╲         YES
                      ╱ INITIALIZING?╲──────────────────────┐
                        ╲           ╱                        │
                          ╲──┬──╱                            │
                          NO │                               │
          ┌──────────────────┤                               │
          │                  │                               │
          │          ┌───────┴────────┐ S05        ┌─────────┴────────┐ S02
          │          │ ACQUIRE SPECTRUM│            │ ACQUIRE SPECTRUM │
          │          └───────┬────────┘            └─────────┬────────┘
          │                  │                               │
          │          ┌───────┴────────┐ S06        ┌─────────┴────────┐ S03
          │          │ CALCULATE DOSE │            ║    PERFORM       ║
          │          └───────┬────────┘            ║  CALIBRATION     ║
          │                  │                     └─────────┬────────┘
          │          ┌───────┴────────┐ S07                  │
          │          │  OUTPUT DOSE   │                      │
          │          └───────┬────────┘                      │
          │                  │                               │
          │               ╱──┴──╲  S08                       │
          │   NO        ╱         ╲                          │
          └───────────╱  ENDING?   ╲                         │
                        ╲           ╱                        │
                          ╲──┬──╱                            │
                        YES │                                │
                            │◄──────────────────────────────┘
                       ┌────┴────┐
                       │   END   │
                       └─────────┘
```

21

# Fig.11

```
                    ┌─────────────┐
                    (    START    )
                    └──────┬──────┘
                           │
         ┌─────────────────────────┐
         │      SEARCH PEAK         │───S31
         └─────────────┬───────────┘
                       │
         ┌─────────────────────────┐
         │    CALCULATE PEAK        │───S32
         │   CENTROID CHANNEL       │
         └─────────────┬───────────┘
                       │
         ┌─────────────────────────┐
         │    CONVERT CHANNEL       │───S33
         │     INTO ENERGY          │
         └─────────────┬───────────┘
                       │
         ┌─────────────────────────┐
         │ CALCULATE CONVERSION     │───S34
         │       FACTOR             │
         └─────────────┬───────────┘
                       │
         ┌─────────────────────────┐
         │   STORE CONVERSION       │───S35
         │       FACTOR             │
         └─────────────┬───────────┘
                       │
                ┌──────────────┐
                (     END      )
                └──────────────┘
```

**EP 2 860 552 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4859853 A
- US 2011051901 A
- US 4461952 A
- JP 2001004754 A

**Non-patent literature cited in the description**

- **LEE B. J.** *Solid-state personal dosimeter using dose conversion algorithm*